(19) Europäisches Patentamt
European Patent Office
Office européen des brevets

(11) **EP 4 027 491 A1**

(12) **EUROPEAN PATENT APPLICATION**

(43) Date of publication:
**13.07.2022 Bulletin 2022/28**

(51) International Patent Classification (IPC):
**H02K 1/276** (2022.01) **H02K 1/32** (2006.01)

(21) Application number: **22150432.7**

(52) Cooperative Patent Classification (CPC):
**H02K 1/2766; H02K 1/32;** H02K 2213/03

(22) Date of filing: **06.01.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.01.2021 JP 2021001635**

(71) Applicant: **TOYOTA JIDOSHA KABUSHIKI KAISHA**
**Toyota-shi, Aichi-ken, 471-8571 (JP)**

(72) Inventors:
• OKOCHI, Toshinori
Toyota-shi, 471-8571 (JP)
• KONDO, Keiji
Toyota-shi, 471-8571 (JP)
• KITAHARA, Yoshizumi
Toyota-shi, 471-8571 (JP)

(74) Representative: **D Young & Co LLP**
**120 Holborn**
**London EC1N 2DY (GB)**

(54) **ROTOR FOR ROTATING ELETRIC MACHINE**

(57) A rotor (12) to be provided in a rotating electric machine (10). The rotor (12) includes a rotor core (22) provided with a pair of flux barriers (40c, 40d) and a void portion (42). A pair of magnets (b, c) are provided in the pair of flux barriers (40c, 40d). Each of the pair of magnets (b, c) has a rectangular shape in its cross section. The void portion (42) is located on an inner peripheral side than an imaginary line (Lm) connecting between inner-peripheral-side corners (bi, ci) of the pair of magnets (b, c). A first width (Wql) is defined by a shortest distance between the pair of flux barriers (40c, 40d). A second width (Wq2) is defined by a distance from the void portion (42) to an intersection point (P) at which the imaginary line (Lm) intersects with a shortest line segment (Ls) whose length corresponds to a shortest distance between one of the pair of magnets (b, c) and the void portion (42). The second width (Wq2) is smaller than the first width (Wql).

## FIG.1

EP 4 027 491 A1

## Description

FIELD OF THE INVENTION

The present invention relates to a rotor that is to be provided in a rotating electric machine, and particularly relates to techniques for suitably determining a position of a void portion provided in a rotor core of the rotor.

BACKGROUND OF THE INVENTION

There is known a rotor which is to be provided in a rotating electric machine, and which includes a cylindrical-shaped rotor core provided with a pair of flux barriers and a void portion. The pair of flux barriers have respective magnet receiving portions in which a pair of magnets are provided. The pair of flux barriers are disposed on respective opposite sides, in a circumferential direction of the rotor core, of a q-axis extending in a radial direction of the rotor core, symmetrically with each other with respect to the q-axis. The void portion is disposed on the q-axis along which a stator magnetic flux is caused to pass. A rotor provided in a rotating electric machine disclosed in JP-6042976-B2 is an example of such a rotor. In the rotor in this Japanese Patent Publication, a pair of magnets disposed on respective opposite sides of the q-axis are arranged to form an inverted-V shape, so that a distance between the pair of magnets and a magnetic resistance therebetween are increased in a direction away from an outer peripheral side of a rotor core of the rotor toward an inner peripheral side of the rotor core. Therefore, it is regarded that almost no magnetic field line passes on the inner peripheral side than an arc connecting between intermediate portions of the pair of magnets, so that the void portion is located on the inner peripheral side than the arc (see FIG 2 of JP-6042976-B2).

SUMMARY OF THE INVENTION

However, in the above-described rotor in the above-identified Japanese Patent Publication, the void portion is on a straight line connecting between inner-peripheral-side end portions of the pair of magnets between which magnetic field lines is caused to pass, so that the passage of a magnet magnetic flux is impeded or obstructed by the void portion whereby a motor torque of the rotating electric machine could be reduced due to reduction of an amount of the magnetic flux, and a motor efficiency of the rotating electric machine could be reduced due to increase of a core loss caused by increase of a density of the magnetic flux. If the void portion is located in a position far from the magnets, there could be no risk of obstruction to the passage of the magnet magnetic flux. However, the location of the void portion in such a position far from the magnets reduces performance for cooling the magnets, and accordingly reduces the motor torque due to demagnetization caused by excessive heating of the magnets.

The present invention was made in view of the background art described above. It is therefore an object of the present invention to make it possible to dispose the void portion in a position close as much as possible to the magnets while suppressing obstruction to passage of the magnet magnetic flux.

The object indicated above is achieved according to the following aspects of the present invention.

According to a first aspect of the invention, there is provided a rotor that is to be provided in a rotating electric machine, the rotor comprising: a cylindrical-shaped rotor core provided with a plurality of flux barriers including a pair of flux barriers that are disposed on respective opposite sides, in a circumferential direction of the rotor core, of a q-axis extending in a radial direction of the rotor core, wherein a pair of magnets are provided in the pair of flux barriers, such that a distance between the pair of magnets on a perpendicular plane perpendicular to an axis of the rotor core is increased in a direction away from an outer peripheral side of the rotor core toward an inner peripheral side of the rotor core, and such that each of the pair of magnets has a rectangular shape in a cross section parallel to the perpendicular plane, wherein a void portion, which is provided in the rotor core, is disposed on the q-axis, and is located on the inner peripheral side than an imaginary line connecting between inner-peripheral-side corners of the pair of magnets on the perpendicular plane, each of the inner-peripheral-side corners being one of corners of a corresponding one of the pair of magnets which is located on the inner peripheral side than the others of the corners of the corresponding one of the pair of magnets, wherein a first width is defined by a shortest distance between the pair of flux barriers on the perpendicular plane, wherein a second width is defined by a distance from the void portion to an intersection point at which the imaginary line intersects with a shortest line segment whose length corresponds to a shortest distance between one of the pair of magnets and the void portion on the perpendicular plane, and wherein the second width is smaller than the first width. It is noted that the above-describe feature that "the void portion is located on the inner peripheral side than an imaginary line" may be paraphrased as "the void portion is located on an inner side of an imaginary line in the radial direction", and the above-described feature that "one of corners of a corresponding one of the pair of magnets is located on the inner peripheral side than the others of the corners of the corresponding one of the pair of magnets" may be paraphrased as "one of corners of a corresponding one of the pair of magnets is located on an inner side of the others of the corners of the corresponding one of the pair of magnets in the radial direction".

According to a preferred arrangement of the first aspect of the invention, the pair of flux barriers are disposed symmetrically with each other with respect to the q-axis, and include respective magnet receiving portions in which the pair of magnets are received to be disposed symmetrically with each other with respect to the q-axis and arranged to have respective attitudes that form an inverted-V shape that opens toward the inner peripheral side of the rotor core, wherein the imaginary line is a straight line or a curved line convexed toward the inner peripheral side of the rotor core, and defines a boundary of a magnet magnetic flux of the pair of magnets, wherein the first width is a q-axis salient pole width through which a stator magnetic flux is allowed to pass along the q-axis, and wherein the second width is a q-axis magnetic-flux passage width through which the stator magnetic flux is allowed to pass in a region between the one of the pair of magnets and the void portion.

According to a second aspect of the invention, in the rotor according to the first aspect of the invention, wherein a pair of second magnets, in addition to the pair of magnets as a pair of first magnets, are provided in the pair of flux barriers, symmetrically with each other with respect to the q-axis, such that the pair of second magnets are located on the outer peripheral side than the pair of first magnets, wherein each of the pair of second magnets has a rectangular shape in a cross section parallel to the perpendicular plane, such that a distance between the pair of second magnets on the perpendicular plane perpendicular to the axis of the rotor core is increased in the direction away from the outer peripheral side of the rotor core toward the inner peripheral side of the rotor core, and such that the pair of second magnets each having the rectangular shape in the cross section have respective sides whose extensions intersect with each other, and wherein the imaginary line is an arc having a center of curvature that lies at an intersection point of the extensions of the sides of the pair of second magnets and passing through the inner-peripheral-side corners of the pair of first magnets.

According to a third aspect of the invention, in the rotor according to the first or second aspect of the invention, the imaginary line is a straight line connecting between the inner-peripheral-side corners of the pair of magnets.

According to a fourth aspect of the invention, in the rotor according to any one of the first through third aspects of the invention, the plurality of flux barriers provided in the rotor core form a plurality of V-shaped arrangement patterns in each of which at least two of the plurality of flux barriers are arranged to have a V shape or U shape that opens toward the outer peripheral side of the rotor core, such that the plurality of V-shaped arrangement patterns are arranged at a constant angular interval around the axis, wherein the q-axis is an intermediate line between each adjacent two of the plurality of V-shaped arrangement patterns, which are adjacent to each other in the circumferential direction of the rotor core, and wherein the pair of flux barriers are two of the plurality of flux barriers, such that the two of the plurality of flux barriers are disposed on the respective opposite sides of the q-axis in the circumferential direction, and such that the two of the plurality of flux barriers are closer to the q-axis, than the others of the plurality of flux barriers, in the circumferential direction.

According to a fifth aspect of the invention, in the rotor according to any one of the first through fourth aspects of the invention, the second width is not smaller than a half of the first width.

In the above-described rotor that is to be provided in the rotating electric machine, the void portion is located on the inner peripheral side than the imaginary line connecting between the inner-peripheral-side corners of the pair of magnets that are disposed on the respective opposite sides of the q-axis, so that it is possible to suppress the void portion from obstructing passage of the magnet magnetic flux and accordingly to suppress reductions of a motor torque and a motor efficiency of the rotating electric machine due to provision of the void portion. Further, the second width is smaller than the first width, wherein the first width is defined by the shortest distance between the pair of flux barriers that are disposed on the respective opposite sides of the q-axis, and wherein the second width is defined by the distance from the void portion to the intersection point at which the imaginary line intersects with the shortest line segment corresponding to the shortest distance between the one of the magnets and the void portion. Thus, the void portion is provided in a position close as much as possible to the pair of magnets while assuring an cross sectional area through which the magnet magnetic flux and the stator magnetic flux are allowed to be pass, so that it is possible to appropriately obtain performance for cooling the pair of magnets owing to the void portion, and accordingly to suppress reduction of a motor torque of the rotating electric machine which could be caused by demagnetization of the magnets due to excessive heating of the magnets. Since the stator magnetic flux having passed through the q-axis salient pole width Wq1 is divided by the void portion into two directions, it is possible to assure the cross sectional area through which the stator magnetic flux is to pass, although the second width is smaller than the first width. It is noted that the first width may be referred to as an q-axis salient pole width through which the stator magnetic flux is allowed to pass along the q-axis, and that the second width may be referred to as q-axis magnetic-flux passage width through which the stator magnetic flux is allowed to pass between the one of the magnets and the void portion.

In the rotor according to the second aspect of the invention, the imaginary line is the arc having the center of curvature that lies at the intersection point of the extensions of the sides of the pair of second magnets (that are disposed on the outer peripheral side than the pair of first magnets) and passing through the inner-peripheral-side corners of the pair of first magnets. Thus, the imaginary line is close to a boundary line defining an actual boundary of the magnet magnetic flux of the pair of first magnets, so that it is possible to appropriately obtain the effect of the first aspect of the invention.

In the rotor according to the third aspect of the invention, the imaginary line is the straight line connecting between the inner-peripheral-side corners of the pair of magnets, so that the void portion is located on the inner peripheral side than the straight line as the imaginary line. It is possible to appropriately obtain the effect of the first aspect of the invention, since a degree of obstruction to the magnet magnetic flux can be made smaller than in the arrangement disclosed in the above-identified Japanese Patent Publication (JP-6042976-B2) in which the void portion is located on the straight line connecting between the inner-peripheral-side corners. The rotor according to this third aspect of the invention corresponds to an arrangement of the second aspect of the invention in which the intersection point of the extensions of the sides of the pair of second magnets is located in a position that is substantially infinitely far, for example, from the inner-peripheral-side corners of the pair of first magnets.

In the rotor according to the fourth aspect of the invention, the plurality of flux barriers form the plurality of V-shaped arrangement patterns in each of which at least two of the plurality of flux barriers are arranged to have the V shape or U shape, such that the plurality of V-shaped arrangement patterns are arranged around the axis, wherein the q-axis is the intermediate line between each adjacent two of the plurality of V-shaped arrangement patterns, which are adjacent to each other in the circumferential direction of the rotor core, and wherein the pair of flux barriers are two of the plurality of flux barriers, such that the two of the plurality of flux barriers are disposed on the respective opposite sides of the q-axis in the circumferential direction, and such that the two of the plurality of flux barriers are closer to the q-axis, than the others of the plurality of flux barriers, in the circumferential direction. The pair of flux barriers are arranged to have respective attitudes that cooperate with each other to form an inverted-V shape. The present invention is advantageously applied to these arrangements.

In the rotor according to the fifth aspect of the invention, the second width is smaller than the first width and is not smaller than the half of the first width, so that it is possible to appropriately obtain performance for cooling the pair of magnets owing to the void portion that is disposed in a position close to the pair of magnets, and also to appropriately assure the cross sectional area through which the magnet magnetic flux and the stator magnetic flux are allowed to be pass. Since the stator magnetic flux having passed through the first width is divided by the void portion into two directions, it is possible to assure the cross sectional area through which the stator magnetic flux is to pass, owing to the arrangement in which the second width is smaller than the first width and is not smaller than the half of the first width.

BRIEF DESCRIPTION OF THE DRAWINGS

FIG 1 is a schematic cross-sectional view for explaining a rotating electric machine including a rotor that is constructed according to an embodiment of the present invention;

FIG 2 is a view showing in enlargement a part of a cross section of the rotor taken in a plane perpendicular to an axis O of the rotor shown in FIG 1, wherein the part corresponds to a quarter circle about the axis O;
FIG. 3 is a view showing in further enlargement a portion of the rotor of FIG 2, wherein the portion is in the vicinity of a q-axis of the rotor; and
FIG 4 is a view corresponding to the view of FIG 3 and showing another embodiment of the present invention.

DETAILED DESCRIPTION OF PREFERRED EMBODIMENTS

The rotating electric machine is referred also to as a rotating machine, and may be an electric motor, an electric generator, or a motor generator that can be used selectively as the electric motor or the electric generator. The rotating electric machine is, for example, a permanent-magnet synchronous motor. Although being constituted preferably by a rare-earth element magnet, each of the magnets may be constituted by any of other permanent magnets. The plurality of flux barriers provided in the rotor core form the plurality of V-shaped arrangement patterns in each of which at least two of the plurality of flux barriers are arranged to have a V shape or U shape that opens toward the outer peripheral side of the rotor core, such that the plurality of V-shaped arrangement patterns are arranged at the constant angular interval around the axis. The q-axis is the intermediate line between each adjacent two of the plurality of V-shaped arrangement patterns, which are adjacent to each other in the circumferential direction of the rotor core. The pair of flux barriers are two of the plurality of flux barriers, such that the two of the plurality of flux barriers are disposed on the respective opposite sides of the q-axis in the circumferential direction, and such that the two of the plurality of flux barriers are closer to the q-axis, than the others of the plurality of flux barriers, in the circumferential direction. The pair of flux barriers are arranged to have respective attitudes that form an inverted-V shape such that a distance between the pair of magnets on the perpendicular plane perpendicular to the axis of the rotor core is increased in the direction away from the outer peripheral side of the rotor core the toward the inner peripheral side of the rotor core. The arrangement patterns of the plurality of flux barriers may be modified as needed. In each of the flux barriers, a corresponding one or at least two of the magnets is provided, for example, such that a void or free space is left in the each of the flux barriers. However, the corresponding one or at least two of the magnets may be embedded in the entirety of the each of the flux barriers. Further, it is possible to employ an arrangement in which each of the flux barriers is divided into a plurality of divided flux barriers such that the first and second magnets are provided in respective ones of the divided flux barriers.

Although being preferably a through-hole through which a cooling fluid is to be caused to pass, as needed, the void portion may be a lightening hole or recess, too. The imaginary line, which defines the boundary of the magnet magnetic flux of the pair of first magnets, is preferably the straight line connecting between the inner-peripheral-side corners of the pair of first magnets on the perpendicular plane, or the curved line or arc having the center of curvature that lies at the intersection point of the extensions of the sides of the pair of second magnets and passing through the inner-peripheral-side corners of the pair of first magnets. However, the imaginary line may be modified as needed. Where the imaginary line is constituted by the arc, the center of curvature of the arc does not necessarily have to lie at the intersection point of the extensions of the sides of the pair of second magnets but may be lie at an intersection point of extensions of sides of the pair of first magnets or lie on the outer peripheral side than the intersection point of extensions of sides of the pair of first magnets. An angle defined between the extensions of the sides of the pair of second magnets is smaller than an angle defined between the extensions of the sides of the pair of first magnets, but may be substantially equal to or larger than the angle defined between the extensions of the sides of the pair of first magnets. The provision of the pair of second magnets is not essential but may be omitted. It is preferable that the q-axis magnetic-flux passage width as the second width is smaller than the q-axis salient pole width as the first width, and is not smaller than the half of the q-axis salient pole width. However, the q-axis magnetic-flux passage width may be smaller than the half of the q-axis salient pole width. Each of the pair of first magnets and pair of second magnets, which has the rectangular shape in the cross section parallel to the perpendicular plane perpendicular to the axis of the rotor core, may be constituted, for example, by a plurality of magnet pieces which are arranged to be in close contact with each other and which cooperate with each other to form the rectangular shape in the above-described cross section.

EMBODIMENTS

Hereinafter, preferred embodiments of the invention will be described in detail with reference to the accompanying drawings. The figures of the drawings are simplified or deformed as needed, and each portion is not necessarily precisely depicted in terms of dimension ratio, shape, etc.

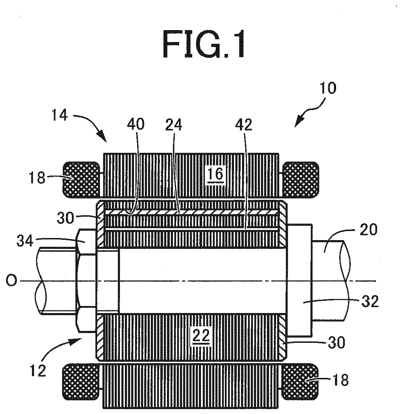

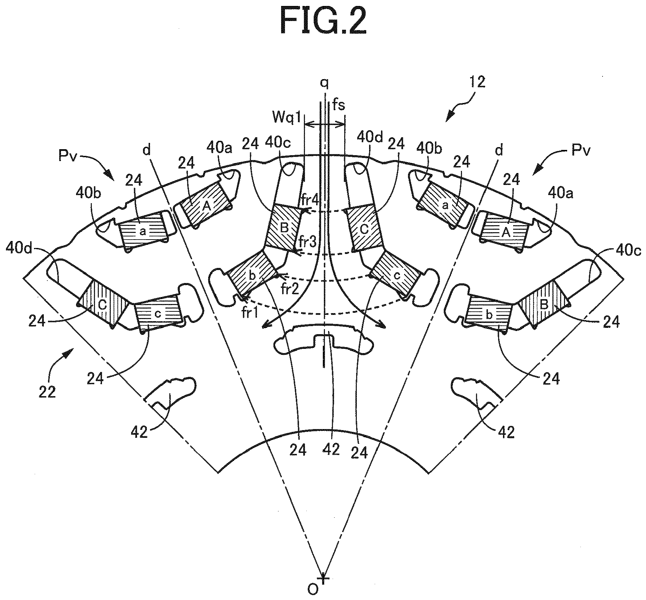

FIG 1 is a schematic cross-sectional view for explaining a rotating electric machine 10 including a rotor 12 according to an embodiment of the present invention, taken in a plane containing an axis O of the rotating electric machine 10. FIG 2 is a view showing in enlargement a part of a cross section of the rotor 12 taken in a plane perpendicular to the axis O, wherein the part corresponds to a quarter circle about the axis O (in an angular range of 90°). The rotating electric machine 10 is a permanent-magnet embedded type synchronous motor serving as a motor generator that can be used selectively as an electric motor or a generator. The rotating electric machine 10 is advantageously used as a drive power source of a battery electric vehicle such as a hybrid electric vehicle, for example. The rotating electric machine 10 includes the above-described rotor 12 and a stator 14 that are coaxial with the axis O. In the following description of the present embodiment, the axis O of the rotating electric machine 10 is also used to refer to an axis of the rotor 12, an axis of the stator 14 and an axis of a rotor shaft 20. The stator 14 includes a cylindrical tubular-shaped stator core 16 disposed on an outer peripheral side of the rotor 12, and a plurality of stator coils 18 wound on the stator core 16. The stator core 16 is constituted by a multiplicity of annular-shaped steel plates that are laminated in an axial direction, i.e., a direction parallel to the axis O, with each of the steel plates being in an attitude perpendicular to the axis O, and is fixed in a casing (not shown) through fixing means such as press-fitting and screw bolts.

The rotor 12 includes the above-described rotor shaft 20, a cylindrical tubular-shaped rotor core 22 attached onto an outer circumferential surface of the rotor shaft 20, and a multiplicity of magnets 24 embedded in the rotor core 22. The rotor core 22 is constituted by a multiplicity of annular-shaped steel plates that are laminated in the axial direction, i.e., the direction parallel to the axis O, with each of the steel plates being in an attitude perpendicular to the axis O. A pair of end plates 30, 30 are provided on axially opposite sides of the rotor core 22, and are fixed to the rotor shaft 22. The rotor shaft 20 is provided with a flange portion 32, so that the rotor core 22 is sandwiched or clamped between the flange portion 32 and a nut 34 that is in thread engagement with the rotor shaft 20, whereby the rotor core 22 is fixed onto the rotor shaft 20. Each of the magnets 24 is constituted by a rare-earth element magnet, and is covered with an insulation film, as needed.

As shown in FIG 2, the rotor core 22 is provided with four kinds of magnet receiving holes in the form of flux barriers 40a, 40b, 40c, 40d (hereinafter referred simply to as flux barriers 40 unless they are to be distinguished from one another). Each of the flux barriers 40 is formed through the rotor core 22 in the axial direction, and includes a magnet receiving portion or portions in which the magnet or magnets 24 are received. The magnet or magnets 24 received in the magnet receiving portion or portions of each of the flux barriers 40 are fixed by adhesive or the like so as to have a certain attitude. As shown in FIG 2, the magnets 24 are categorized into six kinds of magnets A, a, B, b, C, c. In the following description, each of the magnets 24 will be referred to as magnet A, a, B, b, C or c as needed. Each of the magnets A, a, B, b, C, c has a rectangular shape in its cross section parallel to a perpendicular plane that is perpendicular to the axis O, as shown in FIG 2, and has a rectangular prism shape whose length is substantially equal to an axial length of the rotor core 22. Each of the magnets A is fixed in a corresponding one of the flux barriers 40a. Each of the magnets a is fixed in a corresponding one of the flux barriers 40b. Each of the magnets B and each of the magnets b are fixed in a corresponding one of the flux barriers 40c. Each of the magnets C and each of the magnets c are fixed in a corresponding one of the flux barriers 40d. Each flux barrier 40c has a bent portion in a lengthwise intermediate portion in it cross section, and the corresponding magnet B and the corresponding magnet b are fixed on respective opposite sides of the bent portion. Similarly, each flux barrier 40d has a bent portion in a lengthwise intermediate portion in it cross section, and the corresponding magnet C and the corresponding magnet c are fixed on respective opposite sides of the bent portion. Further, each flux barrier 40 has voids or free spaces left on respective opposite sides of the corresponding magnet 24 (that is fixedly received in the each flux barrier 40), and the voids or free spaces can serve as passages through which a cooling fluid is to pass to cool the corresponding magnet 24.

The four kinds of flux barriers 40a, 40b, 40c, 40d form a plurality of V-shaped arrangement patterns Pv (eight V-shaped arrangement patterns Pv in the present embodiment) in each of which the flux barriers 40a, 40b, 40c, 40d are arranged to have a V shape or U shape that opens toward the outer peripheral side of the rotor core 22, such that the plurality of V-shaped arrangement patterns Pv are arranged at a constant angular interval around the axis O of the rotor core 22. Each of the V-shaped arrangement patterns Pv has a shape symmetrical with respect to a d-axis that passes through the axis O. Each flux barrier 40a in which the corresponding magnet A is fixedly received and the corresponding flux barrier 40b in which the corresponding magnet a is fixedly received are symmetrical with each other with respect to the d-axis. Each flux barrier 40c in which the corresponding magnets B, b are fixedly received and the corresponding flux barrier 40d in which the corresponding magnets C,c are fixedly received are symmetrical with each other with respect to the d-axis. That is, in the present embodiment, each of the V-shaped arrangement patterns Pv has a double structure in which a pair of flux barriers 40a, 40b is provided on the outer peripheral side of another pair of flux barriers 40c, 40d. It is noted the provision of the pair of flux barriers 40a, 40b is not essential so that it can be regraded that each of the V-shaped arrangement patterns Pv (having the V shape or U shape that opens toward the outer peripheral side of the rotor core 22) can be constituted by only the flux barriers 40c provided with the magnets B, b and the flux barriers 40d provided with the magnets C, c.

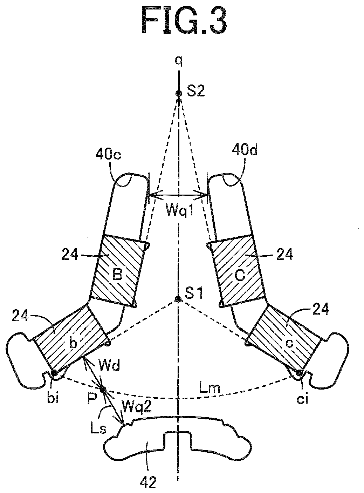

In the rotor 12 described above, an intermediate line between each adjacent two of the plurality of V-shaped arrangement patterns Pv, which are adjacent to each other in a circumferential direction of the rotor 12, is a q-axis, so that a stator magnetic flux (magnetic flux of rotating magnetic field produced by the stator 14) is caused to pass through the rotor 12 along the q-axis when the rotor 12 is used as a component of the rotating electric machine 10. On respective opposite sides of the q-axis in the circumferential direction, a pair of the flux barriers 40c, 40d are located symmetrically with each other with respect to the q-axis, such that the flux barriers 40c, 40d are closer to the q-axis, than the others flux barriers 40, in the circumferential direction, and such that the pair of the flux barriers 40c, 40d cooperate with each other to form an inverted V shape that opens toward the inner peripheral side of the rotor core 22. Further, the magnets B, b and the magnets C, c, which are fixedly received in the pair of the flux barriers 40c, 40d, are located symmetrically on the opposite sides of the q-axis in the circumferential direction, and have respective long sides of the rectangular-shaped cross sections, wherein the long sides cooperate to form an inverted V shape that opens toward the inner peripheral side of the rotor core 22. The magnets b, c, which are located on the inner peripheral side than the magnets B, C, constitute "pair of magnets (first magnets)' recited in the appended claims, and will be referred also to as first magnets b, c in the following description where appropriate. The magnets B, C, which are located on the outer peripheral side than the magnets b, c, constitute "pair of second magnets' recited in the appended claims, and will be referred also to as second magnets B, C in the following description where appropriate. An angle of a vertex S1 of the inverted V shape of the first magnets b, c is larger than an angle of a vertex S2 of the inverted V shape of the second magnets B, C, as shown in FIG. 3. Namely, the angle defined between extensions of the long sides of the first magnets b, c is larger than the angle defined between extensions of the long sides of the second magnets B, C. The angle of the vertex S1 is not smaller than 90°, and is about 120° in the present embodiment. In FIG 2, solid line arrows fs represent examples of magnetic field lines of the stator magnetic flux passing along the q-axis. A shortest distance between the flux barriers 40c, 40d disposed on the respective opposite sides of the q-axis on the above-described perpendicular plane corresponds to a first width, i.e., a q-axis salient pole width Wq1 through which the stator magnetic flux is allowed to pass along the q-axis. Although a direction of the magnetic field lines fs of the stator magnetic flux is downward in the examples shown in FIG 2, the direction of the magnetic field lines fs may be upward in FIG 2.

The rotor core 22 further has cooling holes 42 that are formed through the rotor core 22 in the axial direction. Each of the cooling holes 42 is disposed on the q-axis, and is located on the inner peripheral side than the flux barriers 40c, 40d. The cooling holes 42, through which the cooling fluid is to pass, are provided for cooling the magnets 24, particularly, the first magnets b, c that are located on the inner peripheral side than the other magnets A, a, B, C. Each of the cooling hole 42 has a shape which is symmetrical with respect to the q-axis in the circumferential direction, and which is curved to be convexed toward the outer peripheral side. The cooling holes 42 are located on the inner peripheral side than the first magnets b, c that are located on the inner peripheral side than the other magnets A, a, B, C. Each of the cooling holes 42 corresponds to "void portion" recited in the appended claims.

The first magnets b, c are opposite to each other in terms of N-S polarity, so that the magnet magnetic flux is produced between mutually opposed surfaces of the respective first magnets b, c. Similarly, the second magnets B, C are opposite to each other in terms of N-S polarity, so that the magnet magnetic flux is produced between mutually opposed surfaces of the respective first magnets second magnets B, C. In FIG 2, broken line arrows fr1-fr4 represent examples of magnetic field lines of the magnet magnetic flux produced between the first magnets b, c and between the second magnets B, C. The magnet magnetic flux passes between the first magnets b, c in a region defined between the magnetic field line fr1 and the magnetic field line fr2, wherein the magnetic field line fr1 connects between inner-peripheral side end portions of the long sides of the respective first magnets b, c that are opposed to each other with the q-axis being located therebetween, and wherein the magnetic field line fr2 connects between outer-peripheral-side end portions of the long sides of the respective first magnets b, c (see FIG 2). Similarly, the magnet magnetic flux passes between the second magnets B, C in a region defined between the magnetic field line fr3 and the magnetic field line fr4, wherein the magnetic field line fr3 connects between inner-peripheral-side end portions of the long sides of the respective second magnets B, C that are opposed to each other with the q-axis being located therebetween, and wherein the magnetic field line fr4 connects between outer-peripheral-side end portions of the long sides of the respective second magnets B, C (see FIG 2). Although a direction of the magnetic field lines fr1-fr4 of the magnet magnetic flux is leftward the examples shown in FIG 2, the direction of the magnetic field lines fr1-fr4 may be rightward in FIG 2. A path of each of the magnetic field lines fr1-fr4 is likely to vary depending on attitudes and magnetic charges of corresponding ones of the magnets b, c, B, C and also a magnetic permeability of the rotor core 22.

FIG 3 is a view showing in further enlargement a portion of the rotor 12, wherein the portion is in the vicinity of the cooling hole 42 and the pair of flux barriers 40c, 40d that are provided on the respective opposite sides of the q-axis. FIG 3 shows an imaginary line Lm that is an arc having a center of curvature that lies at the vertex S2 of the inverted V shape of the pair of second magnets B, C, i.e., the intersection point of the extensions of the sides of the pair of second magnets B, C (that are located on the outer peripheral side than the first pair of first magnets b, c), and passing through inner-peripheral-side corners bi, ci of the pair of first magnets b, c on the above-described perpendicular plane, wherein each of the inner-peripheral-side corners bi, ci is one of corners of a corresponding one of the first magnets b, c which is located on the inner peripheral side than the others of the corners of the corresponding one of the first magnets b, c. The imaginary line Lm defines a boundary of the magnet magnetic flux produced between the first magnets b, c. The cooling hole 42 is located on the inner peripheral side than the imaginary line Lm, so that it is possible to suppress the cooling hole 42 from obstructing passage of the magnet magnetic flux and accordingly to suppress reductions of a motor torque and a motor efficiency of the rotating electric machine 10 due to provision of the cooling hole 42. The imaginary line Lm is close to the magnetic field lines fr1 (shown in FIG 2). With the cooling hole 42 being located on the inner peripheral side than the imaginary line Lm, the obstruction by the rotor core 22 to the passage of the magnet magnetic flux can be appropriately suppressed. The imaginary line Lm is changed depending on a position of the vertex S2, namely, the attitudes of the respective second magnets B, C, so that the imaginary line Lm could be located on the outer peripheral side than the magnetic field lines fr1 whereby the passage of the magnet magnetic flux could be somewhat obstructed by the cooling hole 42. However, since the imaginary line Lm is located on the inner peripheral side than at least a straight line connecting between the inner-peripheral-side corners bi, ci of the pair of first magnets b, c, it is possible make a degree of obstruction to the magnet magnetic flux smaller than in the arrangement disclosed in the above-identified Japanese Patent Publication (JP-6042976-B2) in which the cooling hole 42 is disposed on the straight line connecting between the inner-peripheral-side corners bi, ci.

In FIG. 3, reference sign "Ls" denotes a shortest line segment whose length corresponds to a shortest distance between the cooling hole 42 and the magnet b that is one of the first magnets b, c, on the above-described perpendicular plane. In the present embodiment, each of the long sides of the rectangular cross section of the first magnet b intersects with the q-axis with its inclination of about 60° with respect to the q-axis, and the cooling hole 42 is opposed to one (i.e., an inner-peripheral-side one) of the long sides in a direction perpendicular to the long sides, so that the shortest line segment Ls is defined between the one of the long sides and the cooling hole 42, as is apparent from FIG 3. The shortest line segment Ls intersects with the above-described imaginary line Lm at an intersection point P. The shortest distance Wb, which corresponds to a length of the shortest line segment Ls, can be expressed by expression (1) given below, where "Wd" represents a d-axis magnetic-flux passage width that is a distance from the intersection point P to the first magnet b, and "Wq2" represents a q-axis magnetic-flux passage width that is a distance from the intersection point P to the cooling hole 42. The d-axis magnetic-flux passage width Wd is a width through which mainly the magnet magnetic flux is allowed to pass between the first magnets b, c. The q-axis magnetic-flux passage width Wq2 is a width through which mainly the stator magnetic flux is allowed to pass in a region between the first magnet b and the cooling hole 42. Thus, the shortest line segment Ls intersects with the imaginary line Lm at the intersection P, and the q-axis magnetic-flux passage width Wq2 is present between the intersection point P and the cooling hole 42, so that the stator magnetic flux can appropriately pass through the region between the first magnet b and the cooling hole 42.

$$Wb = Wd + Wq2 \quad \ldots\ldots (1)$$

The cooling hole 42 is located such that the q-axis magnetic-flux passage width Wq2 is smaller than the above-described q-axis salient pole width Wq1. In the present embodiment, the q-axis magnetic-flux passage width Wq2 is smaller than the q-axis salient pole width Wq1, and is not smaller than a half of the q-axis salient pole width Wq1, as indicated in expression (2) given below. That is, with the q-axis magnetic-flux passage width Wq2 being smaller than the q-axis salient pole width Wq1, the cooling hole 42 is avoided from being far from the first magnet b more than necessary whereby the reduction of the cooling performance is suppressed, and the cooling hole 42 is located in a position close as much as possible to the first magnet b whereby the cooling performance for cooling the first magnet b can be appropriately obtained. Further, since the q-axis magnetic-flux passage width Wq2 is not smaller than the half of the q-axis salient pole width Wq1, a cross sectional area through which the magnet magnetic flux and the stator magnetic flux are allowed to be pass in a region between the first magnet b and the cooling hole 42 can be appropriately assured. Owing to this arrangement, it is possible to avoid the cooling hole 42 from obstructing passages of the magnet magnetic flux and the stator magnetic flux, and to accordingly appropriately suppress reduction of performances of the rotating electric machine 10 such as reduction of the motor torque due to reduction of an amount of the magnetic flux and reduction of the motor efficiency due to increase of a core loss caused by increase of a density of the magnetic flux. Since the stator magnetic flux having passed through the q-axis salient pole width Wq1 is divided by the cooling hole 42 into two directions, it is possible to appropriately assure the cross sectional area through which the stator magnetic flux is allowed to pass, owing to the arrangement in which the q-axis magnetic-flux passage width Wq2 is not smaller than the half of the q-axis salient pole width Wq1. The position and the shape of the cooling hole 42 are determined such that the following expression (2) is satisfied.

$$(1/2)Wq1 \leq Wq2 < Wq1 \ldots\ldots\ldots\ldots(2)$$

The magnetic field lines fs of the stator magnetic flux is divided, by presence of the cooling hole 42, into opposite sides of the cooling hole 42, as shown in FIG 2, and the divided magnetic field lines fs are caused to pass through a region between the cooling hole 42 and the first magnet b and through a region between the cooling hole 42 and the second magnet c, as shown in FIG. 2. In this instance, since the first magnets b, c and the cooling hole 42 are disposed symmetrically with respect to the q-axis, so that a relationship between the first magnet c and the cooling hole 42 is substantially the same as a relationship between the first magnet b and the cooling hole 42 whereby substantially the same effect can be obtained between the first magnet c and the cooling hole 42, as between the first magnet b and the cooling hole 42.

As described above, in the rotor 12 of the rotating electric machine 10 according to the present embodiment, the cooling hole 42 is located on the inner peripheral side than the imaginary line Lm that is the arc having the center of curvature that lies at the vertex S2, i.e., the intersection point of the extensions of the sides of the pair of second magnets B, C and passing through the inner-peripheral-side corners bi, ci of the pair of first magnets b, c, so that it is possible to suppress the cooling hole 42 from obstructing passage of the magnet magnetic flux and accordingly to suppress reductions of the motor torque and the motor efficiency of the rotating electric machine 10 due to provision of the cooling hole 42. Further, the q-axis magnetic-flux passage width Wq2 is smaller than the q-axis salient pole width Wq1, wherein the q-axis salient pole width Wq1 is defined by the shortest distance between the pair of flux barriers 40c, 40d that are disposed on the respective opposite sides of the q-axis, and wherein the q-axis magnetic-flux passage width Wq2 is defined by the distance from the cooling hole 42 to the intersection point at which the imaginary line Lm intersects with the shortest line segment Ls corresponding to the shortest distance Ls between each one of the first magnets b, c and the cooling hole 42. Thus, the cooling hole 42 is provided in a position close as much as possible to the pair of first magnets b, c while assuring an cross sectional area through which the magnet magnetic flux and the stator magnetic flux are allowed to be pass, so that it is possible to appropriately obtain performance for cooling the pair of first magnets b, c owing to the cooling hole 42, and accordingly to suppress reduction of the motor torque of the rotating electric machine 10 which could be caused by demagnetization of the magnets due to excessive heating of the magnets. Since the stator magnetic flux having passed through the q-axis salient pole width Wq1 is divided by the cooling hole 42 into two directions, it is possible to assure the cross sectional area through which the stator magnetic flux is to pass, although the q-axis magnetic-flux passage width Wq2 is smaller than the q-axis salient pole width Wq1.

Further, in the present embodiment, the imaginary line Lm is the arc having the center of curvature that lies at the vertex S2, i.e., the intersection point of the extensions of the sides of the pair of second magnets B, C (that are disposed on the outer peripheral side than the pair of first magnets b, c) and passing through the inner-peripheral-side corners bi, ci of the pair of first magnets b, c. Thus, the imaginary line Lm is close to the magnetic field lines fr1, i.e., a boundary line defining an actual boundary of the magnet magnetic flux of the pair of first magnets b, c. Owing to this arrangement, it is possible to suppress the cooling hole 42 from obstructing passage of the magnet magnetic flux and also to appropriately obtain performance for cooling the pair of first magnets b, c owing to the cooling hole 42 that is disposed in a position close as much as possible to the pair of first magnets b, c, while assuring the cross sectional area through which the magnet magnetic flux and the stator magnetic flux are allowed to be pass.

Further, the plurality of flux barriers 40 form the plurality of V-shaped arrangement patterns Pv in each of which at least two of the plurality of flux barriers 40 are arranged to have the V shape or U shape, such that the plurality of V-shaped arrangement patterns Pv are arranged around the axis O of the rotor core 22, wherein the q-axis is the intermediate line between each adjacent two of the plurality of V-shaped arrangement patterns Pv, which are adjacent to each other in the circumferential direction, and wherein the pair of flux barriers 40c, 40d are two of the plurality of flux barriers 40, such that the two of the plurality of flux barriers 40 are disposed on the respective opposite sides of the q-axis in the circumferential direction, and such that the two of the plurality of flux barriers 40 are closer to the q-axis, than the others of the plurality of flux barriers 40, in the circumferential direction. The pair of flux barriers 40c, 40d are arranged to have respective attitudes that cooperate with each other to form the inverted-V shape. The present invention is advantageously applied in the present embodiment.

Further, the q-axis magnetic-flux passage width Wq2 is smaller than the q-axis salient pole width Wq1 and is not smaller than the half of the q-axis salient pole width Wq1, so that it is possible to appropriately assure performance for cooling the pair of first magnets b, c, owing to the cooling hole 42 that is disposed in a position close to the pair of first magnets b, c, and also to appropriately assure the cross sectional area through which the magnet magnetic flux and the stator magnetic flux are allowed to be pass. Since the stator magnetic flux having passed through the q-axis salient pole width Wq1 is divided by the cooling hole 42 into two directions, it is possible to assure the cross sectional area through which the stator magnetic flux is allowed to pass, owing to the arrangement in which the q-axis magnetic-flux passage width Wq2 is smaller than the q-axis salient pole width Wq1 and is not smaller than the half of the q-axis salient pole width Wq1.

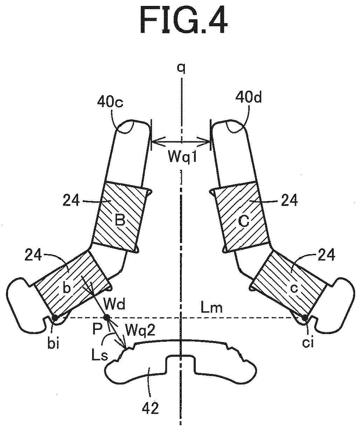

In the above-described embodiment, the imaginary line Lm is the arc having the center of curvature that lies at the vertex S2, i.e., the intersection point of the extensions of the sides of the pair of second magnets B, C (that are disposed on the outer peripheral side than the pair of first magnets b, c) and passing through the inner-peripheral-side corners bi, ci of the pair of first magnets b, c. However, the imaginary line Lm may be also a straight line connecting between the inner-peripheral-side corners bi, ci of the pair of first magnets b, c that are disposed on the inner peripheral side than the other magnets A, a, B, C, as in another embodiment of the present invention shown in shown in FIG 4. Owing to the arrangement in which the cooling hole 42 is located on the inner peripheral side than the straight line as the imaginary line Lm, it is possible to suppress the cooling hole 42 from obstructing passage of the magnet magnetic flux and accordingly to suppress reductions of the motor torque and the motor efficiency of the rotating electric machine 10 due to provision of the cooling hole 42. Since the magnetic field line fr1 passes on the inner peripheral side than the straight line as the imaginary line Lm, the passage of the magnetic field line fr1 could be obstructed by the cooling hole 42. However, a degree of obstruction to the magnet magnetic flux can be made smaller than in the arrangement disclosed in the above-identified Japanese Patent Publication (JP-6042976-B2) in which the cooling hole 42 is disposed on the straight line connecting between the inner-peripheral-side corners bi, ci of the pair of first magnets b, c.

Further, in the embodiment shown in FIG 4, the position and the shape of the cooling hole 42 are determined such that the q-axis magnetic-flux passage width Wq2 is smaller than the q-axis salient pole width Wq1, wherein the q-axis magnetic-flux passage width Wq2 is defined by a distance from the cooling hole 42 to the intersection point P at which the imaginary line Lm that is the straight line intersects with the shortest line segment Ls whose length corresponds to the shortest distance between each one of the magnets b, c and the cooling hole 42 on the perpendicular plane. Owing to this arrangement, the cooling hole 42 is provided in a position close as much as possible to the pair of first magnets b, c while assuring the cross sectional area through which the magnet magnetic flux and the stator magnetic flux are allowed to be pass, so that it is possible to appropriately obtain performance for cooling the pair of first magnets b, c owing to the cooling hole 42, and accordingly to suppress reduction of the motor torque of the rotating electric machine 10 which could be caused by demagnetization of the magnets due to excessive heating of the magnets.

Further, the position and the shape of the cooling hole 42 are determined such that the above-described expression (2) is satisfied, specifically, such that the q-axis magnetic-flux passage width Wq2 is smaller than the q-axis salient pole width Wq1 and is not smaller than the half of the q-axis salient pole width Wq1, so that it is possible to appropriately obtain performance for cooling the first magnets b, c owing to the cooling hole 42 that is disposed in a position close to the first magnets b, c, and also to appropriately assure the cross sectional area through which the magnet magnetic flux and the stator magnetic flux are allowed to be pass. Since the stator magnetic flux having passed through the q-axis salient pole width Wq1 is divided by the cooling hole 42 into two directions, it is possible to assure the cross sectional area through which the stator magnetic flux is to pass, owing to the arrangement in which the q-axis magnetic-flux passage width Wq2 is smaller than the q-axis salient pole width Wq1 and is not smaller than the half of the q-axis salient pole width Wq1.

While the preferred embodiments of the present invention have been described in detail by reference to the drawings, it is to be understood that the embodiments described above are given for illustrative purpose only, and that the present invention may be embodied with various modifications and improvements which may occur to those skilled in the art.

NOMENCLATURE OF ELEMENTS

    10: rotating electric machine
    12: rotor for rotating electric machine
    20: rotor shaft
    22: rotor core
    24, A, a, B, b, C, c: magnets
    b, c: magnets (first magnets)
    B,C: magnets (second magnets)
    40a, 40b, 40c, 40d: flux barriers
    40c, 40d: pair of flux barriers
    42: cooling hole (void portion)
    O: axis
    q: q-axis
    Pv: V-shaped arrangement pattern
    fs: magnetic field line of stator magnetic flux (stator magnetic flux)
    fr1, fr2, fr3, fr4: magnetic field line of magnet magnetic flux (magnet magnetic flux)
    S1,S2: vertexes
    Lm: imaginary line
    Ls: shortest line segment
    P: intersection point
    Wq1: q-axis salient pole width
    Wq2: q-axis magnetic-flux passage width

**Claims**

1. A rotor (12) that is to be provided in a rotating electric machine (10), the rotor (12) comprising:

    a cylindrical-shaped rotor core (22) provided with a plurality of flux barriers (40a, 40b, 40c, 40d) including a pair of flux barriers (40c, 40d) that are disposed on respective opposite sides, in a circumferential direction of the rotor core (22), of a q-axis extending in a radial direction of the rotor core (22),
    wherein a pair of magnets (b, c) are provided in the pair of flux barriers (40c, 40d), such that a distance between the pair of magnets (b, c) on a perpendicular plane perpendicular to an axis (O) of the rotor core (22) is increased in a direction away from an outer peripheral side of the rotor core (22) toward an inner peripheral side of the rotor core (22), and such that each of the pair of magnets (b, c) has a rectangular shape in a cross section parallel to the perpendicular plane,
    wherein a void portion (42), which is provided in the rotor core (22), is disposed on the q-axis, and is located on the inner peripheral side than an imaginary line (Lm) connecting between inner-peripheral-side corners (bi, ci) of the pair of magnets (b, c) on the perpendicular plane, each of the inner-peripheral-side corners (bi, ci) being one of corners of a corresponding one of the pair of magnets (b, c) which is located on the inner peripheral side than the others of the corners of the corresponding one of the pair of magnets (b, c),
    wherein a first width (Wq1) is defined by a shortest distance between the pair of flux barriers (40c, 40d) on the perpendicular plane,
    wherein a second width (Wq2) is defined by a distance from the void portion (42) to an intersection point (P) at which the imaginary line (Lm) intersects with a shortest line segment (Ls) whose length corresponds to a shortest distance between one of the pair of magnets (b, c) and the void portion (42) on the perpendicular plane, and
    wherein the second width (Wq2) is smaller than the first width (Wq1).

2. The rotor (12) according to claim 1,

    wherein a pair of second magnets (B, C), in addition to the pair of magnets (b, c) as a pair of first magnets (b, c), are provided in the pair of flux barriers (40c, 40d), symmetrically with each other with respect to the q-axis, such that the pair of second magnets (B, C) are located on the outer peripheral side than the pair of first magnets (b,c),
    wherein each of the pair of second magnets (B, C) has a rectangular shape in a cross section parallel to the perpendicular plane, such that a distance between the pair of second magnets (B, C) on the perpendicular plane perpendicular to the axis (O) of the rotor core (22) is increased in the direction away from the outer peripheral side of the rotor core (22) toward the inner peripheral side of the rotor core (22), and such that the pair of second magnets (B, C) each having the rectangular shape in the cross section have respective sides whose extensions intersect with each other,
and wherein the imaginary line (Lm) is an arc (Lm) having a center (S2) of curvature that lies at an intersection point of the extensions of the sides of the pair of second magnets (B, C) and passing through the inner-peripheral-side corners (bi, ci) of the pair of first magnets (b, c).

3. The rotor (12) according to claim 1 or 2,
wherein the imaginary line (Lm) is a straight line (Lm) connecting between the inner-peripheral-side corners (bi, ci) of the pair of magnets (b, c).

4. The rotor (12) according to any one of claims 1-3,

wherein the plurality of flux barriers (40a, 40b, 40c, 40d) provided in the rotor core (22) form a plurality of V-shaped arrangement patterns (Pv) in each of which at least two of the plurality of flux barriers (40a, 40b, 40c, 40d) are arranged to have a V shape or U shape that opens toward the outer peripheral side of the rotor core (22), such that the plurality of V-shaped arrangement patterns (Pv) are arranged at a constant angular interval around the axis (O),
wherein the q-axis is an intermediate line between each adjacent two of the plurality of V-shaped arrangement patterns (Pv), which are adjacent to each other in the circumferential direction of the rotor core (22), and
wherein the pair of flux barriers (40c,40d) are two (40c,40d) of the plurality of flux barriers (40a, 40b, 40c, 40d), such that the two (40c,40d) of the plurality of flux barriers (40a, 40b, 40c, 40d) are disposed on the respective opposite sides of the q-axis in the circumferential direction, and such that the two (40c,40d) of the plurality of flux barriers (40a, 40b, 40c, 40d) are closer to the q-axis, than the others (40a,40b) of the plurality of flux barriers (40a, 40b, 40c, 40d), in the circumferential direction.

5. The rotor (12) according to any one of claims 1-4,
wherein the second width (Wq2) is not smaller than a half of the first width (Wq1).

6. The rotor (12) according to any one of claims 1-5,

wherein the pair of flux barriers (40c, 40d) are disposed symmetrically with each other with respect to the q-axis, and include respective magnet receiving portions in which the pair of magnets (b, c) are received to be disposed symmetrically with each other with respect to the q-axis and arranged to have respective attitudes that form an inverted-V shape that opens toward the inner peripheral side of the rotor core (22),
wherein the imaginary line (Lm) is a straight line (Lm) or a curved line (Lm) convexed toward the inner peripheral side of the rotor core (22), and defines a boundary of a magnet magnetic flux of the pair of magnets (b, c),
wherein the first width (Wq1) is a q-axis salient pole width (Wq1) through which a stator magnetic flux (fs) is allowed to pass along the q-axis, and
wherein the second width (Wq2) is a q-axis magnetic-flux passage width (Wq2) through which the stator magnetic flux (fs) is allowed to pass in a region between the one of the pair of magnets (b, c) and the void portion (42).

# FIG.1

# FIG.2

# FIG.3

# FIG.4

Europäisches
Patentamt

European
Patent Office

Office européen
des brevets

# EUROPEAN SEARCH REPORT

Application Number

**EP 22 15 0432**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 215864 A1 (BOSCH GMBH ROBERT [DE]) 19 March 2020 (2020-03-19) * paragraph [0019]; figure 1 * ----- | 1,2,4-6 | INV. H02K1/276 H02K1/32 |
| X | US 2017/229933 A1 (LEONARDI FRANCO [US] ET AL) 10 August 2017 (2017-08-10) * figure 1A * ----- | 1,3,4,6 | |

TECHNICAL FIELDS
SEARCHED       (IPC)

H02K

The present search report has been drawn up for all claims

| Place of search | Date of completion of the search | Examiner |
|---|---|---|
| The Hague | 23 May 2022 | Van de Maele, Wim |

EPO FORM 1503 03.82 (P04C01)

## ANNEX TO THE EUROPEAN SEARCH REPORT
## ON EUROPEAN PATENT APPLICATION NO.

EP 22 15 0432

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | Publication date | Patent family member(s) | Publication date |
|---|---|---|---|
| DE 102018215864 A1 | 19-03-2020 | DE 102018215864 A1<br>WO 2020057847 A1 | 19-03-2020<br>26-03-2020 |
| US 2017229933 A1 | 10-08-2017 | CN 107070151 A<br>DE 102017102242 A1<br>US 2017229933 A1 | 18-08-2017<br>10-08-2017<br>10-08-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6042976 B